# EUROPEAN PATENT APPLICATION

(11) **EP 4 782 333 A1**
(43) Date of publication of application: **29.07.2026**
(21) Application number: 25305088.4
(22) Date of filing: 24.01.2025
(51) Int. Cl.: B64C 11/06, B64C 27/473

(54) **STRUCTURAL COMPONENT FOR A BLADE**

(71) Applicant: Ratier-Figeac SAS, 46101 Figeac Cedex (FR)
(72) Inventor: PRUNET, Ludovic, 46101 Figeac Cedex (FR); MAHUL, Remy, 46101 Figeac Cedex (FR); COURBIERES, Thierry, 46101 Figeac Cedex (FR); PLO, Herve, 46101 Figeac Cedex (FR); HIRSHAUER, Florent, 46101 Figeac Cedex (FR)
(74) Representative: Dehns

(57) **Abstract**

There is provided a structural component for a blade, the structural component extending along a longitudinal axis and comprising a structural portion, wherein the structural portion comprises a root portion (210); and a pin (220) extending axially from the root portion (210), wherein the pin (220) is configured to interface with a blade pitch change actuation system, and wherein the structural portion and the pin (210) are integrally formed from a composite material. There is also provided a blade including a structural component. There is also provided a method of forming a structural component for a blade.

## Description

### TECHNICAL FIELD

The present disclosure relates to a structural component for a blade, a blade including the structural component, and a method for forming a structural component for a blade.

### BACKGROUND

Propellers, for example aircraft propellers, typically comprise a plurality of blades fixed to a rotating propeller hub. Variable-pitch propellers are provided with a pitch change actuation system that enables the blade pitch of each blade to be controlled. The pitch change actuation system allows the angle of attack of each blade relative to the oncoming airflow to be varied. For example, the blade pitch can be adjusted from a feather position (with the blades parallel to the oncoming airflow - minimum thrust/drag) to a reverse position that may provide reverse thrust.

Existing blades for use in variable-pitch propellers may comprise means adjacent the blade root for interfacing with a pitch change actuation system such that the pitch of the blades may be varied. However, these means are typically additional metal components connected to the blade root, thereby increasing the mass of the blades and increasing zones of weakness to the blades. Therefore, there remains a need for an improved design of a blade component for interfacing with a pitch change actuation system, specifically a component which provides good load bearing performance and which enables a reduction in the overall weight of the blades in a variable pitch propeller.

### SUMMARY

According to a first aspect of the disclosure, there is provided a structural component for a blade, the structural component extending along a longitudinal axis. The structural component comprises a structural portion, wherein the structural portion comprises a root portion. The structural component comprises a pin extending axially from the root portion, wherein the pin is configured to interface with a blade pitch change actuation system. The structural portion and the pin are integrally formed from a composite material.

In any example of the disclosure, the structural portion may be configured to form a spar for a blade.

In any example of the disclosure, the root portion may be a root portion of the spar.

In any example of the disclosure, the structural portion may be configured to form an external surface of the blade.

In any example of the disclosure, the structural portion may be configured to form the entire blade.

In any example of the disclosure, the structural component may comprise a retention member adapted for mounting the structural component into a blade hub.

In any example of the disclosure, the retention member may encircle the root portion.

In any example of the disclosure, the retention member may be configured to interface with a blade retention bearing.

In any example of the disclosure, the retention member may define at least one bearing race.

In any example of the disclosure, the root portion may comprise a protrusion extending outwardly therefrom.

In any example of the disclosure, the protrusion may at least partially extend circumferentially about the root portion.

In any example of the disclosure, the retention member is configured to engage with the protrusion so as to be retained on the root portion.

In any example of the disclosure, the pin may taper away from the root portion.

In any example of the disclosure, the pin may comprise a linear portion at or adjacent its distal end.

In any example of the disclosure, the structural component may be obtained by forming the root portion with an extended portion, and machining the extended portion so as to form the pin extending axially from the root portion.

In any example of the disclosure, the machining may comprise at least one of water jet cutting, laser cutting and CNC cutting.

In any example of the disclosure, the structural portion may be configured to extend to the tip of the blade.

In any example of the disclosure, the structural portion may be configured to end before the tip of the blade.

In any example of the disclosure, the composite material may be one or more of: carbon fiber reinforced polymer (CFRP), glass fiber reinforced polymer (GFRP), aramid fiber reinforced polymer (AFRP), natural fibers (such as flax, hemp, nettle and wood) mixed with bio-sourced resin, and thermoplastic matrix (such as PPS, PEKK, and PEEK).

In any example of the disclosure, the pin may be a trunnion pin.

In any example of the disclosure, the blade may be a propeller blade, a propulsor blade, a turbofan blade, a gas turbine blade, a rotor blade or an open rotor blade.

In any example of the disclosure, the structural portion may be hollow or solid.

In any example of the disclosure, the structural portion may be formed around a core.

In any example of the disclosure, the core may have a honeycomb structure.

In any example of the disclosure, the core may be formed from a foam material and/or balsa.

In any example of the disclosure, the longitudinal axis may be configured to extend substantially parallel to or co-axially with a longitudinal axis of the blade.

In any example of the disclosure, the pin may extend along an axis which extends substantially parallel to the longitudinal axis.

In any example of the disclosure, the pin may extend along an axis which is offset from the longitudinal axis.

In any example of the disclosure, the pin may have a thickness or diameter which is less than the diameter of the root portion.

In any example of the disclosure, the pin may have a thickness or diameter which is less than or equal to a wall thickness of the root portion.

In any example of the disclosure, the thickness or diameter of the pin may extend substantially perpendicular to the axis of the pin.

In any example of the disclosure, the pin may be positioned at any desired circumferential location on the root portion.

In any example of the disclosure, the tapered portion of the pin may taper away from the root portion towards a distal end of the pin.

In any example of the disclosure, the linear portion may be cylindrical.

In any example of the disclosure, the linear portion may comprise a taper.

In any example of the disclosure, the pin may be a trunnion pin.

In any example of the disclosure, the protrusion may be in the form of a taper or flare.

In any example of the disclosure, the protrusion may be integrally formed with the root portion.

In any example of the disclosure, the retention member may encircle the root portion at or adjacent the radially inner end thereof.

In any example of the disclosure, the retention member may be formed from a metallic material, for example, steel.

In any example of the disclosure, the retention member may be formed from a composite material.

In any example of the disclosure, the retention member may be a two-piece construction.

According to another aspect of the disclosure, there is provided a blade comprising the structural component of any of the above examples.

According to another aspect of the disclosure, there is provided a method of forming a structural component for a blade. The method comprises forming a structural component from a composite material, wherein the structural component comprises a structural portion and a pin, wherein the structural portion comprises a root portion. The structural component extends along a longitudinal axis. The pin extends axially from the root portion and is configured to interface with a blade pitch change actuation system. The structural portion and the pin are integral.

In any example of the disclosure, forming the structural component may comprise forming the root portion with an extended portion.

In any example of the disclosure, forming the structural component may comprise machining the extended portion so as to form the pin extending axially from the root portion.

In any example of the disclosure, machining may include at least one of the following: water jet cutting, laser cutting and computer numerical control (CNC) cutting.

In any example of the disclosure, the structural component may form a spar of the blade, an external surface of the blade, or the entire blade.

### BRIEF DESCRIPTION OF DRAWINGS

Various examples will now be described, by way of example only, and with reference to the accompanying drawings in which:
Fig. 1 is a partially sectioned, schematic perspective side view taken from a first axial end of part of a blade according to an example of the disclosure;
Fig. 2 is a partially sectioned, schematic perspective side view taken from a second, opposite axial end of the part of the blade of Fig. 1;
Fig. 3 is a differently partially sectioned, schematic perspective side view taken from the second, opposite axial end of the part of the blade of Fig. 1;
Fig. 4 is a schematic perspective view of part of the blade from the second, opposite axial end according to another example of the disclosure;
Fig. 5 shows an example blade pitch change actuation system for a propeller; and
Fig. 6 shows a method of forming a structural component according to an example of the disclosure.

### DETAILED DESCRIPTION

The present disclosure relates to a structural component for a blade. In any example, the structural component can be a load bearing component. In the present example, the structural component extends along a longitudinal axis A-A and comprises a root portion and a pin extending longitudinally or axially from the root portion. The root portion and the pin are formed from a composite material. In any example of the disclosure, the structural component may be provided in a blade, for example a blade according to one of the examples described herein. In any example of the disclosure, the pin may extend along a longitudinal pin axis and the longitudinal pin axis may be offset from a longitudinal axis of the root portion or the longitudinal axis A-A.

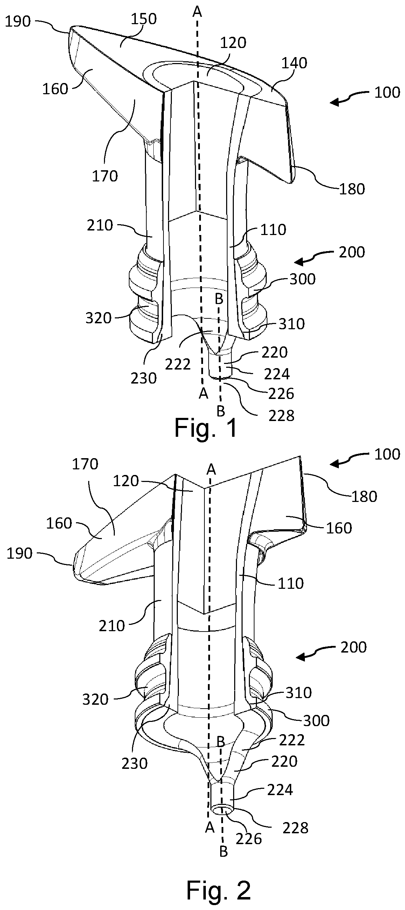

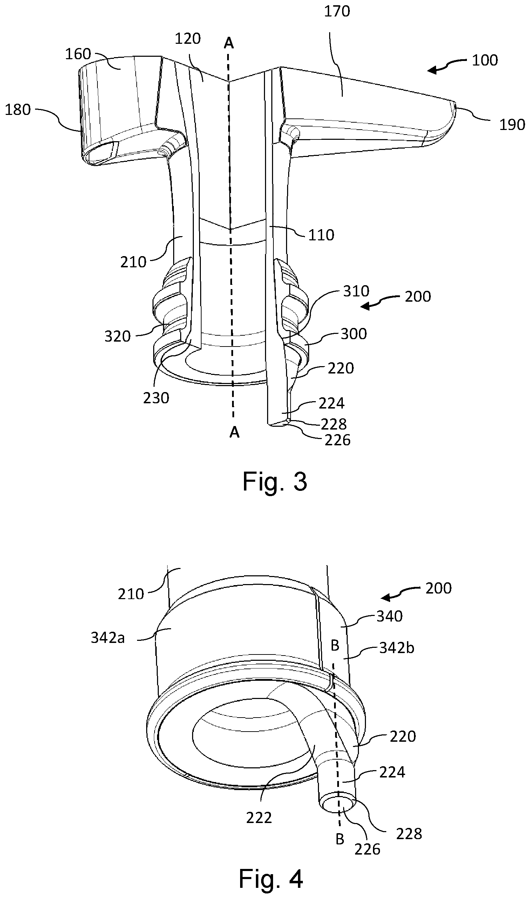

With reference to Figs. 1 to 3, various partially sectioned, schematic perspective views of a portion of a blade 100 with a blade root 200 are shown. In particular, the blade root 200 and a portion of the mid-section of the blade 100 are shown. Fig. 4 shows part of another example blade root 200. In any example, the blade 100 may be a propeller blade. In other examples, the blade may be another type of blade, for example, a propulsor blade, turbofan blade, a gas turbine blade, a rotor blade or open rotor blade. The blade 100 may comprise a structural component according to the disclosure, which, in some examples including the examples of Figs. 1 to 4, may comprise a structural portion comprising a root portion. In any example, the structural portion may be a spar 110 which provides structural support for the blade 100. Alternatively, the structural portion may form at least an external surface of the blade 100. The structural portion may, in some examples, form the entire blade 100.

Although only a portion of the blade 100 is shown in the figures, it will be understood that the blade 100 extends along the longitudinal axis A-A so as to form a complete blade 100. Thus, in any example of the disclosure, the blade 100 may extend axially from a tip thereof (not shown), the tip positioned at a first axial end of the blade, to the blade root 200 positioned at a second, opposite axial end of the blade. When the blade is mounted to a blade hub, the tip at the first axial end thereof will be positioned radially outwardly of the blade root 200 at the second opposite end thereof. In any example of the disclosure, the blade 100 may further comprise an airfoil body 170 (only partially shown) extending from the blade root 200 to the blade tip (not shown) and forming a leading edge 180 (only partially shown) and a trailing edge 190 (only partially shown) on opposite sides thereof, the leading edge and the trailing edge extending along the axial extent of the airfoil body 170.

The spar 110 may be hollow or solid. The hollow spar 110 may be formed around a core 120. The core 120 may have a honeycomb structure and be formed from at least one of a foam material and balsa. The spar 110 may extend axially through the blade 100, more specifically through the airfoil body 170, and may extend from the blade root 200 to the blade tip (not shown). Alternatively, the spar 110 may terminate before the blade tip (not shown). In any example, the structural portion may extend along a longitudinal axis substantially parallel or coaxial with the longitudinal axis A-A. The blade 100 may further comprise a leading edge filler 140 and a trailing edge filler 150 which define the conventional blade shape. The blade 100 may comprise a skin 160 provided around the exterior of the leading edge filler 140 and the trailing edge filler 150, the skin 160 forming the outer surface of the airfoil body 170.

In any example, the blade 100 may comprise a blade root 200 extending along the longitudinal axis A-A. As will be explained in further detail below, the blade 100 may be adapted so as to provide means for mounting the blade into a blade hub. In the present example, the blade 100 comprises a structural component including a root portion 210 and pin 220. The root portion 210 is a structural component or part of a structural component, such as a blade root 200 and/or the spar 110. In the present example, the root portion 210 is defined by an elongate section of the spar 110 which extends axially outwardly from the blade root 200. The pin 220 extends longitudinally or axially away from the root portion 210 at the second axial end of the blade 100 and extends in the axially inward direction. In the present example, the root portion 210 is substantially tubular. However, other shapes are contemplated. In the present example, the root portion 210 is shown with an open end, so that the core is exposed. However, as will be understood, the blade root 200 may comprise a balancing system (not shown). Static and dynamic balancing systems, such as those known in the art, may be used to counter uneven weight distribution of the blade. In the present example, the pin 220 is configured to interface with a blade pitch change actuation system. The interaction between the blade and an example blade pitch change actuation system is explained in more detail below.

In the present example, the structural component, including the root portion 210 and the pin 220 are formed from a composite material. In the present example, the root portion 210 and the pin 220 are integrally formed. That is, in the present example, the spar 110 comprises both the integrally formed root portion 210 and the pin 220. In other examples, the pin 220 may be integrally formed with another structural component of the blade 100 in addition to the root portion 210. In conventional blades, pins are often formed from metallic materials and subsequently attached to the blade root by various connection means. By forming the pin 220 from a composite material, the overall weight of the blade 100 can be reduced. Furthermore, by integrally forming the root portion 210 and the pin 220, the requirement to bond these components is obviated. Bonding zones are undesirable as they can introduce weaknesses in the structural integrity of the blade, for example, by creating locations where stress caused by loads is concentrated. Therefore, by integrally forming the root portion 210 and the pin 220, the structural integrity between these components is improved compared with conventional means. The composite material may be one or more of: carbon fiber reinforced polymer (CFRP), glass fiber reinforced polymer (GFRP), aramid fiber reinforced polymer (AFRP), natural fibers (such as flax, hemp, nettle and wood) mixed with bio-sourced resin, and thermoplastic matrix (such as PPS, PEKK, and PEEK).

In any example, the pin 220 may extend axially away from the root portion 210 so as to interface with a blade pitch change actuation system. This interaction is described in more detail below. In any example, the pin 220 may extend along a pin axis B-B which may extend substantially parallel to the longitudinal axis A-A and which may be spaced from the longitudinal axis A-A. In any example of the disclosure, the pin axis B-B may be offset from the longitudinal axis A-A of the root portion. In any example, the pin 220 may have a thickness or diameter which is less than the diameter of the root portion 210. In any example, the pin 220 may have a thickness or diameter which is less than or equal to a wall thickness of the root portion 210. In any example, the thickness or diameter of the pin 220 extends substantially perpendicular to the pin axis B-B of the pin 220. In any example, the pin 220 may be positioned at any desired circumferential location on the root portion 210.

In any example, the pin 220 may comprise a tapered portion 222. In any example, the pin 220 may comprise a linear portion 224. In some examples, the pin may not taper. In any example, the tapered portion 222 may taper away from the root portion 210 towards a distal end 226 of the pin 220, where the distal end of the pin is the end which is axially removed from the root portion 210. In some examples and as shown in Fig. 1, the tapered portion 222 may taper away from the root portion 210 towards the linear portion 224. By providing a taper, a force acting on the pin when the pin is engaged with the pitch change actuation system is gradually transferred to the root portion 210, thereby reducing the likelihood of failure due to increased stress. In some examples as shown, the tapered portion 222 tapers longitudinally in both the circumferential direction (around the circumference of the root portion 210) and a direction substantially perpendicular to the axial direction. With regard to circumferential taper, this can be most clearly seen in Fig. 2. As can be seen, the circumferential extent of the pin 220 reduces longitudinally away from the root portion 210. As above, this reduces the stress experienced. Similarly, the diameter or thickness of the pin 220 reduces longitudinally away from the root portion 210, as can be seen in Fig. 3. In other examples, the pin 220 may taper in only the circumferential or radial direction.

In the present example, the pin 220 comprises a linear portion 224 adjacent or at its distal end. As will be explained, the linear portion 224 allows for the interaction between the blade 100 and pitch change actuation system. In the present example, the linear portion 224 is cylindrical. In other examples the linear portion 224 may take any other shape. In the present example, the pin axis B-B of the linear portion 224 is substantially parallel with the longitudinal axis A-A. Therefore, due to the offset between the longitudinal axis A-A and the pin axis B-B of the pin 220, an azimuthal force applied about the longitudinal axis A-A to the linear portion 224 of the pin will cause rotation of the blade 100, thereby resulting in a change of pitch. By providing a cylindrical portion, the pin 220 may smoothly interface with the pitch change actuation system.

In any example, the linear portion 224 may also comprise a taper. In the present example, the linear portion 224 comprises a taper 228 at its distal end. In some examples, the taper may be a chamfer. In other examples, the distal-most end may define a hemisphere or section thereof. By gradually reducing the width of the linear portion 224 (for example by the taper), the pin 220 may be more easily aligned and thus inserted into the pitch change actuation system.

As will be explained below, the pin 220 may be obtained by a machining process. In any example, the pin 220 may be a trunnion pin.

The root portion 210 may comprise a protrusion extending outwardly therefrom, in some examples in a direction substantially perpendicular to the longitudinal axis A-A. In some examples and as shown, the protrusion is in the form a taper or flare. Particularly, the root portion increases in diameter at and towards the second axial end of the blade. The protrusion may at least partially extend in the circumferential direction about the root portion. In the present example, the protrusion 230 extends continuously in the circumferential direction. In other examples, the protrusion 230 may be discontinuous. That is, the protrusion 230 may comprise one or more protrusion portions with circumferential gaps therebetween. A discontinuous protrusion 230 may be advantageous to save material costs and/or to reduce the mass of the structural component. In the present example, the protrusion 230 is flared. That is, the protrusion 230 widens progressively towards the distal end of the root portion 210. In any example, the protrusion 230 may be integrally formed with the root portion 210.

In any example, the blade root 200 may comprise a retention member 300. The retention member 300 may be adapted for mounting the blade 100 into a blade hub. In some examples and as shown, the retention member 300 is hollow and encircles the root portion 210 along at least part of the axial extent thereof. In some examples and as shown, the retention member 300 may form a sleeve. The retention member 300 may encircle the root portion 210 at or adjacent the second axial or radially inner end thereof. In other examples, the retention member300 may encircle a different section of the blade root portion 210. In any example, the retention member 300 may be formed from a metallic material. For example, the retention member 300 may be formed from steel. In other examples, the retention member 300 may integrally formed with the structural component. In this case or in any other example, the retention member 300 may be formed form a composite.

In any example, the retention member 300 may be configured to engage with the protrusion 230 so as to be retained on the root portion 210. In any example, the radially inner surface 310 of the hollow retention member 300 may be shaped so as to complement the shape of the protrusion 230. In the present example, the retention member 300 comprises an opposing taper that complements the taper 230, so as to be flush with the taper 230 when the retention member 300 is in situ on the root portion 210. As will be understood, the protrusion 230 may therefore mechanically retain the retention member 300 on the root portion 210.

In some examples, and as shown in Figs. 1 to 3, the retention member 300 defines at least one inner bearing race 320. It will be understood that the blade hub (not shown) may comprise at least one complementary outer bearing race, with balls or rollers arranged between the at least one inner bearing race and the at least one outer bearing race, thus forming a ball bearing or roller bearing, such that when the blade 100 is mounted in the blade hub, the blade 100 may be more easily rotated about the longitudinal axis A-A. In another example, such as that shown in Fig. 4, the retention member 340 may not define a bearing race. In this case, the retention member 340 may be formed from a low-friction material, such as bronze, PTFE filled carbon, or graphite, to form a sliding bearing surface. It will be understood however that the example shown in Fig. 4 may have any of the features described in relation to Figs. 1 to 3.

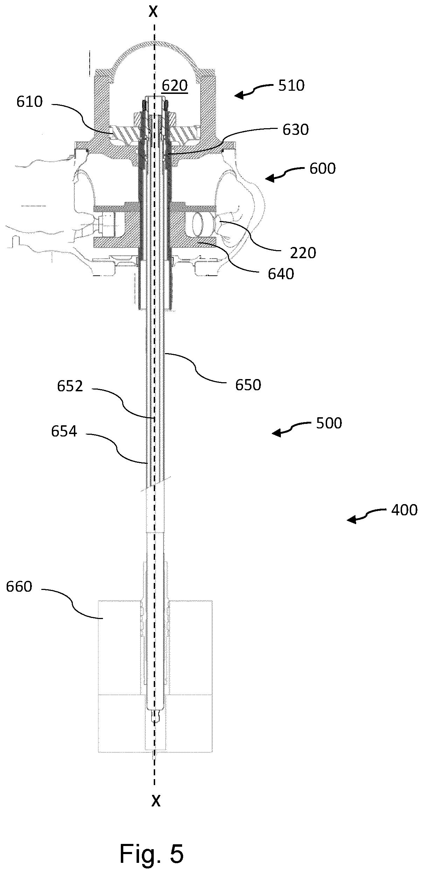

The structural component and blade including the structural component described above may be used in a propeller system. Such a propeller system may comprise a propeller assembly comprising a blade pitch change actuation system and a plurality of blades including a structural component according to any example. The structural component of the or each blade may be configured to interface with any conventional blade pitch change actuation system. Any suitable blade pitch actuation system may be used to interface with the pin 220, for example, any known hydraulic, electric or pneumatic system, or any suitable alternative actuation system developed in the future. One such example blade pitch change actuation system for varying the pitch of a blade with a structural component according to the disclosure will now be described. Fig. 5 shows a propeller system 400 comprising a propeller assembly 500 comprising an example blade pitch change actuation system 600. A centreline (longitudinal) axis X-X of the propeller assembly 500 is shown about which components of the propeller assembly are mounted. For example, propeller blades of the propeller assembly 500 are mounted about the axis X-X. Reference to axially forward is understood to mean along axis X-X in the direction of the top of the figure and aft is understood to mean along axis X-X in the direction of the bottom of the figure. Reference to a radial direction is understood to refer to extending perpendicularly from axis X-X, for example away from axis X-X towards the left and right hand side of the figure.

The propeller assembly 500 comprising a rotary hub 510 is generally configured to rotate propeller blades to propel a vehicle, such as an aircraft, to which the propeller assembly 500 is mounted. In this example the propeller assembly 500 comprises propeller blades with variable pitch, which allows control of the angle of attack of the blade relative to the oncoming airflow. The propeller blades each have a pin 220, such as one of those described above, configured to interface with a blade pitch change actuation system such that the angle of the blade can be adjusted. For example, the blade pitch can be adjusted from a feather position (with the blades parallel to the oncoming airflow - minimum thrust/drag) to a reverse position that may provide reverse thrust.

To adjust the pitch of the propeller blades the blade pitch change actuation system 600 is provided within the rotary hub 510. The blade pitch change actuation system 600 comprises a piston 610 located within a piston chamber 620, an actuator shaft 630 coupled to and extending from the piston 610, an actuator flange 640 extending from the actuator shaft 630, and a transfer tube 650 extending from the piston chamber 620.

The transfer tube 650 receives hydraulic fluid from a transfer tube receiving component 660 of the propeller system 400 and supplies hydraulic fluid to a first and a second side of piston 610. To supply hydraulic fluid to either side of the piston 610 the transfer tube 650 comprises two concentric hydraulic fluid passageways. The first inner hydraulic fluid passageway 652 is configured to supply hydraulic fluid from the transfer tube receiving component 660 to the first side of the piston 610. The second outer hydraulic fluid passageway 654 is configured to supply hydraulic fluid from the transfer tube receiving component 660 to the second side of the piston 610.

To vary the propeller blade pitch, a hydro-mechanical power and control assembly of the propeller system 400 in combination with the transfer tube receiving component 660 cause a pressure difference across the two sides of the piston 610 by altering the hydraulic fluid flow and pressure supplied to the first and second side of the piston 610. This causes the piston 610 to translate either axially forward or aft dependent on the pressure difference across the two sides of the piston 610. It will be appreciated that relative positional terms such as "forward" and "aft" are with reference to the normal operational attitude of the blade pitch change actuation system. Translation of the piston 610 causes the actuator shaft 630 and the actuator flange 640 to also translate as each of the piston 610, actuator shaft 630 and actuator flange 640 are mechanically coupled to one another. The actuator flange 640 is configured to interface with a pin, for example pin 220, which converts the translation of the actuator flange 640 into a rotational motion of a blade, i.e. to change the pitch. As explained above, any suitable blade pitch actuation system may be used to interface with the pin 220, and is not limited to the above-described system.

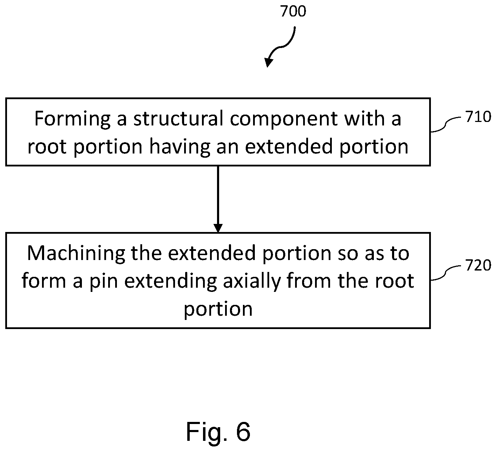

A method 700 of forming the structural component of any example will now be described with reference to Fig. 6. In some examples, the method comprises forming a structural component from a composite material, wherein the structural component comprises a structural portion comprising a root portion 210, and a pin 220, wherein the structural component extends along a longitudinal axis A-A, and wherein the pin 220 extends longitudinally from the root portion 210. The structural portion and the pin 220 are integral.

In any example, forming the structural component may comprise forming a root portion having an extended portion (step 710). In any example, the extended portion may be a continuation of the root portion 210 extending in the axially inward direction. In any example, forming the structural component may comprise machining the extended portion so as to form the pin extending longitudinally from the remaining root portion 210 (step 720).

In the present example, the structural portion forms a spar 110. In the present example, the spar 110 is initially formed with an extended portion. That is, the spar 110 is formed with a blade root longitudinally extended compared to a conventional blade root to which a conventional pin may be attached. Put another way, the spar 110 is formed with a blade root longitudinally longer than required. In other examples, the structural portion may form at least a surface of the blade, or the entire blade.

In the present example, the blade root 200 (for example the extended portion) is machined so as to form a pin extending longitudinally from the remaining blade root. That is, the axially inner region of the spar 110 is machined to remove material in such a way that the pin 220 is formed, extending from a root portion 210. Machining may include at least one of the following: water jet cutting, laser cutting and computer numerical control (CNC) cutting.

The protrusion 230 may be formed by depositing an increased amount of composite material in this region during the formation of the spar 110. Additionally or alternatively, the spar 110 may be machined using any of the above cutting methods to form the flange 230.

In the present example, the blade root 200 comprises a retention member 300. The retention member 300 may be separate and subsequently attached to the root portion 210. By being formed from a composite material, the structural portion allows for shrinkage, and the retention member 300 may be subsequently slid onto the root portion 210. The structural portion may be subsequently expanded so as to retain the retention member 300 thereon. In another example, with reference to Fig. 4, the retention member340 is a two-piece 342a, 342b construction. The two pieces 342a, 342b may be arranged about the root portion 210 and subsequently joined, for example, by welding. In other examples, the method may comprise machining the blade root 200 so as to form the retention member 300. Machining may include at least one of the following: water jet cutting, laser cutting and computer numerical control (CNC) cutting.

In any example, the method may comprise machining the blade root 200 so as to provide a tapered pin 220. Machining may include at least one of the following: water jet cutting, laser cutting and computer numerical control (CNC) cutting.

In an alternative example, the extended portion may be shaped to directly form the pin, without any machining being required, for instance through the use of pre-adapted composite plies or through additive manufacturing.

It will be understood that in any example of the disclosure, substantially parallel to may mean extending within -30 degrees and +30 degrees of parallel to, or within -20 degrees and +20 degrees of parallel to, or within -10 degrees and +10 degrees of parallel to, or within -5 degrees and +5 degrees of parallel to. It will be understood that in any example of the disclosure, substantially perpendicular to may mean extending within -30 degrees and +30 degrees of perpendicular to, or within -20 degrees and +20 degrees of perpendicular to, or within -10 degrees and +10 degrees of perpendicular to, or within -5 degrees and +5 degrees of perpendicular to.

It will be understood that in any example of the disclosure, an axial direction is a direction parallel or substantially parallel to the longitudinal axis A-A of the structural component. It will be understood that in any example of the disclosure, a radial direction is a direction extending perpendicular or substantially perpendicular to the longitudinal axis A-A of the structural component when the blade is mounted to a blade hub. It will be understood that in any example of the disclosure, the axially outward direction is the direction extending parallel or substantially parallel to the longitudinal axis A-A of the structural component from the root of the blade towards the tip thereof. It will be understood that in any example of the disclosure, the axially inward direction is a direction opposite to the axially outward direction, in other words the axially inward direction is a direction extending parallel or substantially parallel to the longitudinal axis A-A of the structural component from the tip of the blade towards the root thereof.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly the disclosure is not to be seen as limited by the foregoing description, but is only limited by the scope of the appended claims.

## Claims

1. A structural component for a blade, the structural component extending along a longitudinal axis and comprising:
a structural portion, wherein the structural portion comprises a root portion; and
a pin extending axially from the root portion, wherein the pin is configured to interface with a blade pitch change actuation system, and
wherein the structural portion and the pin are integrally formed from a composite material.

2. The structural component of claim 1, wherein the structural portion is configured to form a spar for the blade.

3. The structural component of claim 1 or 2, wherein the structural portion is configured to form an external surface of the blade.

4. The structural component of claim 1, 2 or 3, wherein the structural portion is configured to form the entire blade.

5. The structural component of any preceding claim, further comprising a retention member adapted for mounting the structural component into a blade hub.

6. The structural component of claim 5, wherein the retention member encircles the root portion.

7. The structural component of claim 5 or 6, wherein the retention member is configured to interface with a blade retention bearing, wherein, optionally, the retention member defines at least one bearing race.

8. The structural component of any preceding claim, wherein the root portion comprises a protrusion extending outwardly therefrom, and
wherein, optionally, the protrusion at least partially extends circumferentially about the root portion.

9. The structural component of claim 8, when dependent on claim 6 or 7, wherein the retention member is configured to engage with the protrusion so as to be retained on the root portion.

10. The structural component of any preceding claim, wherein the pin tapers away from the root portion, and/or wherein the pin comprises a linear portion at or adjacent its distal end.

11. The structural component of any preceding claim, wherein the structural component is obtained by forming the root portion with an extended portion, and
machining the extended portion so as to form the pin extending axially from the root portion.

12. A blade comprising a structural component according to any preceding claim.

13. A method of forming a structural component for a blade, the method comprising:
forming a structural component from a composite material, wherein the structural component comprises a structural portion and a pin, wherein the structural portion comprises a root portion,
wherein the structural component extends along a longitudinal axis,
wherein the pin extends axially from the root portion and is configured to interface with a blade pitch change actuation system, and
wherein the structural portion and the pin are integral.

14. The method of claim 13, wherein forming the structural component comprises forming the root portion with an extended portion, and
machining the extended portion so as to form the pin extending axially from the root portion.

15. The method of claim 13 or 14, wherein the structural component forms a spar of the blade, an external surface of the blade, or the entire blade.
